(19) Europäisches Patentamt
European Patent Office
Office européen des brevets

(11) **EP 4 223 156 B1**

(12) **EUROPEAN PATENT SPECIFICATION**

(45) Date of publication and mention
of the grant of the patent:
**27.11.2024   Bulletin 2024/48**

(21) Application number: **22155701.0**

(22) Date of filing: **08.02.2022**

(51) International Patent Classification (IPC):
***A24D 3/04*** *(2006.01)*

(52) Cooperative Patent Classification (CPC):
**A24D 3/04**

(54) **SMOKE FILTRATION DEVICE FOR MAKING SELF- AND MACHINE-ROLLED CONICALLY SHAPED CIGARETTES AND MANUFACTURING METHOD**

RAUCHFILTERVORRICHTUNG ZUR HERSTELLUNG VON SELBST- UND MASCHINENGEDREHTEN KONISCH GEFORMTEN ZIGARETTEN UND HERSTELLUNGSVERFAHREN DAFÜR

DISPOSITIF DE FILTRATION DE FUMÉE POUR LA FABRICATION DE CIGARETTES DE FORME CONIQUE AUTO-ROULÉES ET ROULÉES À LA MACHINE ET PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.08.2023   Bulletin 2023/32**

(73) Proprietor: **WeedWorks GmbH
6003 Luzern (CH)**

(72) Inventors:
• **DAUD,Gutseriev
London W1H 6BE (GN)**

• **KORENTVIT, Filip
London SW1X (GB)**
• **MOLDASCHI, Maximilian
1030 Vienna (AT)**

(74) Representative: **Schmauder & Partner AG
Patent- & Markenanwälte VSP
Zwängiweg 7
8038 Zürich (CH)**

(56) References cited:
**EP-A1- 1 512 335     DE-A1- 19 645 563**

## Description

Field of the Invention

The present invention relates to a novel smoke filtration device for making self- and machine-rolled conically shaped cigarettes and to a method of manufacturing such a device.

Background of the Invention

Smoke filtration devices for cigarettes have long been known and are being produced and sold worldwide on a very large scale. As generally known, such smoke filtration devices may have various shapes and filter materials, as disclosed e.g., in US 2,996,067 and in GB 2105566 A. DE 196 45 563 A1 discloses a smoke filtration device according to the preamble of claim 1.

One type of smoke filtration device is specifically intended for making self- and machine-rolled conically shaped cigarettes containing a smokable content such as tobacco and/or various cannabis products. Such devices will generally have a tubular body with a slightly diverging profile, as shown e.g., in US D913,580 S. A proximal end of the tubular body, which is intended to be in contact with the user's lips, will generally have a smaller diameter than the opposing distal end, which is intended to form a support for a cigarette paper rolled around it.

A challenge in the design of any smoke filtration device lies in the contrasting goals of filtration effect and gas conductivity. A strong filtration effect means, in particular, a good trapping efficiency of condensable smoke components, which could be reached by including a very tortuous path between the distal and proximal end, but also by including a suitable particulate filtering material with a high adsorption capability, such as active charcoal. These measures evidently reduce the conductivity for the smoke/air mixture which is ultimately inhaled by the user. Moreover, an excessively strong filtration will lead to an undesirable loss of flavor and taste.

In view of the above, there is still a need for improved smoke filtration devices which are capable of providing a well-balanced filtration effect and, furthermore, are pleasant for the user.

Summary of the Invention

According to one aspect of the invention, a smoke filtration device for making self- and machine-rolled conically shaped cigarettes comprises a frusto-conical tubular body with a proximal end, a distal end and an internal smoke filtering passage connecting the two ends. The smoke filtering passage is integrally formed with the tubular body, and the latter is made of a sintered ceramic material. The filtering passage is configured as an open-cell porous structure having an effective porosity of 75 to 85%.

According to another aspect, in a method of manufacturing the above defined smoke filtration device, the frusto-conical tubular body including the open-cell porous structure is formed by additive manufacturing.

In the present context, the term "internal" in relation with the smoke filtering passage shall be understood in the sense that the passage provides fluid communication between the proximal and distal ends but not between any of those ends and any lateral portions of the tubular body.

The term "integrally formed" shall be understood in the sense that the structural parts forming the filtering passage and the tubular body together form a single body.

The term "frusto-conical" shall be understood as usual in geometry to denote a transversal section of a conical body, i.e., a conical body with a tip section removed.

The term "open-cell porous structure" refers to a solid structure comprising a plurality of internal cavities or "cells" which are not completely closed and therefore are in direct or indirect fluid communication with each other. It is not excluded that an open-cell porous structure may also have a certain amount of closed cells. Accordingly, the term "effective porosity" has been introduced to define the portion of total void space that is capable of transmitting a fluid.

The term "additive manufacturing", also known as "3D printing", refers to a method in which the frusto-conical tubular body including the open-cell porous structure is progressively formed or deposited in accordance with the desired three-dimensional shape. Typically, the process is carried out layer by layer, under computer control. In the present case where the tubular body is produced as a single body of a sintered ceramic material, the additive manufacturing process involves computer controlled forming of a so-called green body from a homogeneous mixture of ceramic powder, binder and additives. This green body is then subjected to heating, whereby a sintered ceramic material is obtained.

Advantages of the present invention include the fact that the rate of smoke passage in the desired longitudinal direction can be defined by appropriately configuring the internal smoke filtering passage while excluding any undesirable passage through lateral portions of the tubular body. As further advantages, the ceramic body has a pleasant haptic feeling for the user and it offers the possibility of multiple use and cleaning.

Advantageous embodiments are defined in the dependent claims and described further below.

It will be understood that various embodiments of open-cell structures are possible. Such embodiments comprise geometrically well-defined structures, but also irregular structures in which the cells are formed by a stochastic or chaotic process leading to a distribution of cell size and wall geometries.

According to one embodiment (claim 2), the open-cell porous structure is configured as a gyroid mesh structure. The term "gyroid mesh" shall refer to the geometric structure as disclosed, e.g., in "Gyroid" Wikipedia, Wikimedia Foundation, date of last modification 30 April 2021, https://en.wikipedia.org/wiki/Gyroid.

The dimensions of the tubular body may be selected in a range appropriate for the purpose of forming a base for rolling onto a cigarette. According to one advantageous embodiment (claim 3), the tubular body has a length of 15 mm to 35 mm, an average diameter of about 6 mm to 10 mm, and an aperture angle of 0.4o to 5.5o. For the avoidance of doubt, the term "aperture angle" shall refer here to the full conical angle.

According to a further embodiment (claim 4), the smoke filtration device has an air permeability of 10 to 100 K. Herein, an air permeability value of nK means an air permeability of $n \times 1000$ ml/minute/10cm$^2$/100 mm Wg (water gauge) pressure, as determined by measuring the pressure "p" in mm Wg generated by a flow of 1'050 mls of air per minute through 10cm$^2$ of the sample, and calculating from the equation:

$$\text{air permeability} = 1'050 \times 100/p$$

as disclosed, e.g., in GB 2105566 A.

Brief description of the drawings

The above mentioned and other features and objects of this invention and the manner of achieving them will become more apparent and this invention itself will be better understood by reference to the following description of various embodiments of this invention taken in conjunction with the accompanying drawings, wherein:

Fig. 1    shows a smoke filtration device with a rolled-on conically shaped cigarette, in a longitudinal sectional view;

Fig. 2    shows the smoke filtration device of Fig. 1, also in a longitudinal sectional view; and

Fig. 3    shows the internal smoke filtering passage of the smoke filtration device of Fig. 1, in a perspective view.

Detailed description of the invention

It will be understood that the figures are not necessarily drawn to scale. In some instances, relative dimensions are substantially distorted for ease of visualization. Identical or corresponding features in the various figures will generally be denoted with the same reference numerals.

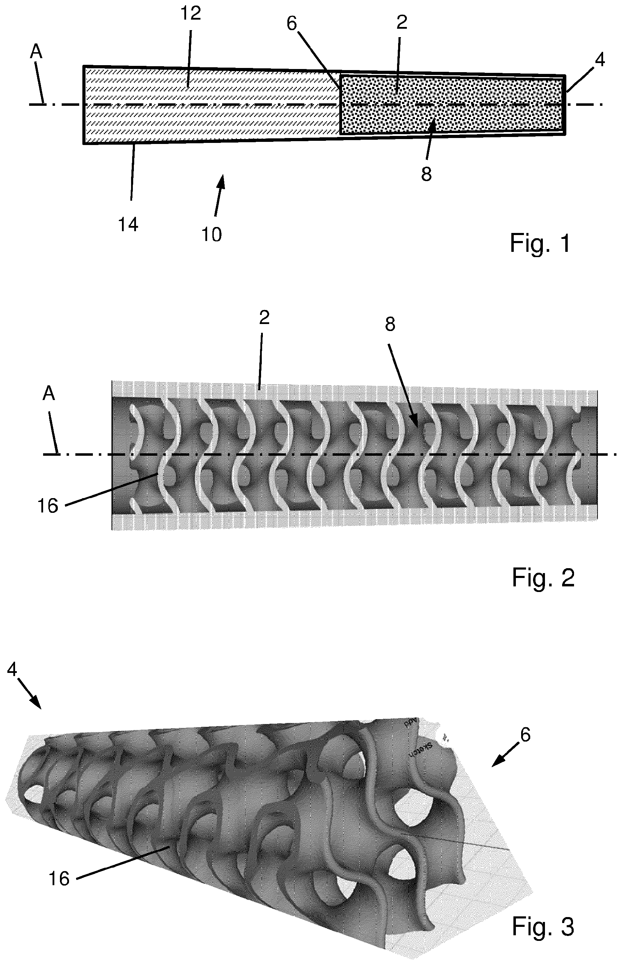

A smoke filtration device generally shown in Fig. 1 comprises a frusto-conical tubular body 2 with a longitudinal axis A, a proximal end 4, a distal end 6 and an internal smoke filtering passage 8 connecting the two ends. Also shown in Fig. 1 is a self- or machine-rolled cigarette 10 comprising a portion of smokable product 12 surrounded by an external layer of cigarette paper 14. In the presently shown example, the cigarette paper is arranged in a manner covering the entire external surface of the tubular body 2.

The tubular body 2 is made of a sintered ceramic material. As shown in Fig. 2, the smoke filtration device according to the invention has a filtering passage 8 integrally formed with the tubular body 2. The filtering passage is configured as an open-cell porous structure having an effective porosity of 75 to 85%

In the embodiment shown in Figs. 2 and 3, the filtering passage is configured as a gyroid mesh structure 16. In the particular example shown, the gyroid mesh structure is substantially uniform and comprises twelve unit cells in longitudinal direction and one unit cell in radial direction. Other embodiments can be used.

**Claims**

1.  A smoke filtration device for making self- and machine-rolled conically shaped cigarettes (10), comprising a frusto-conical tubular body (2) with a proximal end (4), a distal end (6) and an internal smoke filtering passage (8) connecting said ends, **characterized in that**

    said smoke filtering passage is integrally formed with said tubular body,
    said tubular body is made of a sintered ceramic material,
    said smoke filtering passage is configured as an open-cell porous structure having an effective porosity of 75 to 85%.

2.  The smoke filtration device according to claim 1, wherein the open-cell porous structure is configured as a gyroid mesh structure (16).

3.  The smoke filtration device according to claim 1 or 2, wherein said tubular body (2) has a length of 15 mm to 35 mm, an outer diameter of 6 to 10 mm, and an aperture angle of 0.4o to 5.5o.

4.  The smoke filtration device according to one of claims 1 to 3, having an air permeability of 10 to 100 K.

5.  A method of manufacturing a smoke filtration device according to one of claims 1 to 4, wherein said frusto-conical tubular body including said open-cell porous structure is formed by additive manufacturing.

**Patentansprüche**

1. Rauchfiltervorrichtung zur Herstellung von selbst- und maschinengedrehten konisch geformten Zigaretten (10), umfassend einen kegelstumpfförmigen rohrförmigen Körper (2) mit einem proximalen Ende (4), einem distalen Ende (6) und einem inneren Rauchfilterdurchgang (8), der die besagten Enden verbindet,
   **dadurch gekennzeichnet, dass**

   der besagte Rauchfilterdurchgang einstückig mit dem rohrförmigen Körper ausgebildet ist, der besagte rohrförmige Körper aus einem gesinterten keramischen Material hergestellt ist, der besagte Rauchfilterdurchgang als offenzellige poröse Struktur mit einer effektiven Porosität von 75 bis 85 % ausgebildet ist.

2. Rauchfiltervorrichtung nach Anspruch 1, wobei die offenzellige poröse Struktur als eine gyroide Maschenstruktur (16) ausgebildet ist.

3. Rauchfiltervorrichtung nach Anspruch 1 oder 2, wobei der besagte rohrförmige Körper (2) eine Länge von 15 mm bis 35 mm, einen Außendurchmesser von 6 bis 10 mm und einen Öffnungswinkel von 0.4º bis 5.5º aufweist.

4. Rauchfiltervorrichtung nach einem der Ansprüche 1 bis 3, die eine Luftdurchlässigkeit von 10 bis 100 K aufweist.

5. Verfahren zur Herstellung einer Rauchfiltervorrichtung nach einem der Ansprüche 1 bis 4, wobei der besagte kegelstumpfförmige rohrförmige Körper, der die offenzellige poröse Struktur enthält, durch additive Fertigung gebildet wird.

**Revendications**

1. Dispositif de filtration de fumée pour la fabrication de cigarettes (10) de forme conique, auto-roulées ou roulées à la machine, comprenant un corps tubulaire tronconique (2) avec une extrémité proximale (4), une extrémité distale (6) et un passage interne (8) de filtration de fumée reliant lesdites extrémités,
   **caractérisé en ce que**

   ledit passage de filtration de fumée est intégralement formé avec ledit corps tubulaire, ledit corps tubulaire est constitué d'un matériau céramique fritté, ledit passage de filtration de fumée est configuré comme une structure poreuse à cellules ouvertes ayant une porosité effective de 75 to 85%.

2. Dispositif de filtration de fumée selon la revendication 1, dans lequel la structure poreuse à cellules ouvertes est configurée comme une structure à maille gyroïde (16).

3. Dispositif de filtration de fumée selon la revendication 1 ou 2, dans lequel ledit corps tubulaire (2) a une longueur de 15 mm à 35 mm, un diamètre extérieur de 6 à 10 mm et un angle d'ouverture de 0.4º à 5.5º.

4. Dispositif de filtration de fumée selon l'une des revendications 1 à 3, ayant une perméabilité à l'air de 10 à 100 K.

5. Procédé de fabrication d'un dispositif de filtration de fumée selon l'une des revendications 1 à 4, dans lequel ledit corps tubulaire tronconique comprenant ladite structure poreuse à cellules ouvertes est formé par fabrication additive.

Fig. 1

Fig. 2

Fig. 3

**REFERENCES CITED IN THE DESCRIPTION**

**Patent documents cited in the description**

- US 2996067 A
- GB 2105566 A
- DE 19645563 A1
- US D913580 S

**Non-patent literature cited in the description**

- Gyroid. Wikimedia Foundation, 30 April 2021